# EUROPÄISCHE PATENTSCHRIFT

(11) **EP 1 959 803 B1**
(45) Veröffentlichungstag und Bekanntmachung des Hinweises auf die Patenterteilung: **13.01.2010**
(21) Anmeldenummer: 06819325.9
(22) Anmeldetag: 08.11.2006
(51) Int. Cl.: A47J 39/00

(54) **DAMPFGARGERÄT**
STEAM COOKER
APPAREIL DE CUISSON A LA VAPEUR

(30) Priorität: 01.12.2005 EP 05360053
(43) Veröffentlichungstag der Anmeldung: 27.08.2008
(73) Patentinhaber: BSH Bosch und Siemens Hausgeräte GmbH, 81739 München (DE)
(72) Erfinder: CADEAU, Christophe, F-67640 Lipsheim (FR); MASTIO, Emmanuel, F-67118 Geispolsheim (FR)
(86) Internationale Anmeldenummer: PCT/EP2006/068217
(87) Internationale Veröffentlichungsnummer: WO 2007/062964

(56) Entgegenhaltungen:
- EP-A- 1 610 063
- EP-A1- 0 673 615
- WO-A2-2005/024299

## Beschreibung

Die Erfindung betrifft ein Dampfgargerät zum Garen von Lebensmitteln mittels Dampf, mit einem Garraum, einem Wasserbehälter zur Speicherung von Wasser, einer Heizeinrichtung zum Verdampfen von Wasser und einer Verbindungsleitung zwischen dem Wasserbehälter und dem Garraum, über die das Wasser von dem Wasserbehälter in den Garraum einleitbar ist, wobei der Wasserbehälter im Betrieb des Dampfgargeräts ausschließlich über die Verbindungsleitung mit der Atmosphäre verbunden ist.

Ein Dampfgargerät zum drucklosen Garen von Lebensmitteln ist aus der EP 0 673 615 B1 bekannt. Dieses Dampfgargerät umfasst im Inneren des Gargefäßes eine durch eine Heizeinrichtung beheizbare Platte. Darüber hinaus weist das Dampfgargerät eine Vorrichtung zum Zuführen von Wasser auf, die ein gerades Rohr umfasst, das wenigstens teilweise im Inneren des Gargeräts angeordnet ist, um Wasser aus einem Vorratsbehälter auf die erhitzte Platte tropfen zu lassen. Ein wesentlicher Nachteil des bekannten Dampfgargeräts ist darin zu sehen, dass das Rohr im Garraum im Bereich über der Platte relativ schnell verkalkt. Darüber hinaus müssen Vorrichtungen zur Regelung des Wasserzuflusses vorgesehen sein, die den technischen Aufwand des Geräts erhöhen und die Herstellung des Geräts verteuern.

Demgegenüber ist bei derartigen Dampfgargeräten, bei denen der Wasserbehälter im Betrieb des Dampfgargeräts ausschließlich über die Verbindungsleitung mit der Atmosphäre verbunden ist, darin zu sehen, dass auch Ablagerungen und/oder Verdampfungsrückstände in die Verbindungsleitung und darüber hinaus bis in den Wasserbehälter gelangen können.

Daher ist es Aufgabe der Erfindung, ein Dampfgargerät zu schaffen, bei dem die das Wasser zuführenden Elemente des Dampfgargeräts nicht verunreinigt werden.

Diese Aufgabe wird durch ein Dampfgargerät, welches die Merkmale nach Patentanspruch 1 aufweist, gelöst.

Ein erfindungsgemäßes Dampfgargerät zum Garen von Lebensmitteln mittels Dampf weist einen Garraum und einen Wasserbehälter zur Speicherung von Wasser auf. Darüber hinaus umfasst das Dampfgargerät eine Heizeinrichtung zum Verdampfen von Wasser und eine Verbindungsleitung, welche zwischen dem Wasserbehälter und dem Garraum ausgebildet ist. Über die Verbindungsleitung ist das Wasser von dem Wasserbehälter in den Garraum einleitbar. Der Wasserbehälter ist im Betrieb des Dampfgargeräts ausschließlich über die Verbindungsleitung mit der Atmosphäre verbunden. Ein wesentlicher Gedanke der Erfindung besteht darin, dass die Verbindungsleitung eine Hauptleitung und eine By-Pass-Leitung aufweist. Die Hauptleitung erstreckt sich zwischen dem Wasserbehälter und dem Garraum. Die By-Pass-Leitung zweigt von der Hauptleitung ab und mündet in die Atmosphäre. Die Verbindungsleitung ist somit als ein zumindest zweikanaliges System ausgebildet. Dadurch kann erreicht werden, dass der Wassertransport von dem Wasserbehälter in den Garraum nicht verunreinigt wird und somit quasi stets sauberes und reines Wasser in den Garraum förderbar ist. Ablagerungen, beispielsweise Fett oder dergleichen, und/oder Verdampfungsrückstände können somit nicht mehr von dem Garraum in die Verbindungsleitung oder nicht mehr in den Wasserbehälter gelangen.

In vorteilhafter Weise ist ein in die Atmosphäre mündendes erstes Ende der By-Pass-Leitung vom Höhenniveau oberhalb dem in die Hauptleitung mündenden zweiten Ende der By-Pass-Leitung angeordnet. Dies ermöglicht eine zuverlässige Zuführung von Luft und gewährleistet andererseits ein sicheres und situationsbedingtes Nachlaufen von Wasser aus dem Wasserbehälter über die Verbindungsleitung in den Garraum.

Aufgrund des Prinzips, einen atmosphärischen Druckausgleich innerhalb des Wasserbehälters ausschließlich über die Verbindungsleitung zu ermöglichen, muss die Verbindungsleitung im Betrieb des Dampfgargeräts somit einerseits Wasser aus dem Wasserbehälter in den Garraum transportieren, und andererseits gleichzeitig einen Luftzutritt ermöglichen, der das Volumen des aus dem Wasserbehälter abgegebenen Wassers ersetzt. Der Leitungsquerschnitt der Verbindungsleitung ist so zu wählen, dass das Fließen von Wasser trotz seiner Oberflächenspannung und des gleichzeitigen Luftzutritts und Lufteinströmens in der dem Wasser entgegengesetzten Strömungsrichtung möglich ist. Die Menge des Wasserzutritts in den Garraum kann daher durch die Wahl des Leitungsquerschnitts der Verbindungsleitung eingestellt werden.

In bevorzugter Weise mündet die Verbindungsleitung innerhalb des Garraums in ein Verdampfungsbecken. In dem Verdampfungsbecken stellt sich durch das Einleiten von Wasser über die Verbindungsleitung und insbesondere die Hauptleitung, ein Wasserspiegel ein. In vorteilhafter Weise ist unterhalb und/oder seitlich des Verdampfungsbeckens eine Heizeinrichtung angeordnet, über die das Wasser im Verdampfungsbecken erhitzt und verdampft werden kann. Durch eine derartige Anordnung kann erreicht werden, dass eine gegebenenfalls auftretende Verkalkung lediglich nur noch auf der großen und leicht zugänglichen Fläche des Verdampfungsbeckens auftritt. Diese kann über eine Beschickungsöffnung des Dampfgargeräts leicht erreicht werden und somit auch eine einfache und aufwandsarme Reinigung des Verdampfungsbeckens ermöglicht werden.

In vorteilhafter Weise ist eine Oberkante der Hauptleitung im Bereich der Einmündung in das Verdampfungsbecken vom Höhenniveau niedriger angeordnet als ein erster Übergangsbereich zwischen der Hauptleitung und der By-Pass-Leitung. Bei dem erfindungsgemäßen Dampfgargerät ist ein Prinzip realisiert, bei dem sich ein Wasserstand innerhalb des Verdampfungsbeckens in vorteilhafter Weise in einem Bereich des maximalen Wasserstands innerhalb des Verdampfungsbeckens selbst reguliert. In dem Wasserbehälter ist ein Unterdruck im Vergleich zur Atmosphäre erzeugt. Durch die oben angegebene vorteilhafte Ausgestaltung ist der Übergangsbereich zwischen der Hauptleitung und der By-Pass-Leitung in vertikaler Betrachtungsweise höher angeordnet, als die Oberkante der Hauptleitung im Bereich der Einmündung in das Verdampfungsbecken. Der erste Übergangsbereich ist in vorteilhafter Weise auf einem Höhenniveau angeordnet, welches im Wesentlichen dem Höhenniveau im Bereich des Maximalwasserstands innerhalb des Verdampfungsbeckens entspricht. Wesentlich ist, dass der Übergangsbereich jedoch vom Höhenniveau her nicht höher als ein oberer Randbereich des Verdampfungsbeckens angeordnet ist. Solange der Wasserspiegel innerhalb des Verdampfungsbeckens gleich oder oberhalb dem Höhenniveau des ersten Übergangsbereichs ist, wird der Wasserzulauf vom Wasserbehälter über die Hauptleitung in das Verdampfungsbecken gesperrt. Sinkt der Wasserspiegel innerhalb des Verdampfungsbeckens aufgrund eines Verdampfungsvorgangs unterhalb des Höhenniveaus des ersten Übergangsbereichs, so kann Luft über die By-Pass-Leitung zum Volumen- bzw. Druckausgleich des in das Verdampfungsbecken geflossenen Wassers in den Wasserbehälter zurückströmen. Sobald jedoch der Wasserspiegel in dem Verdampfungsbecken wieder ein Höhenniveau erreicht hat, welches dem Höhenniveau des Übergangsbereichs entspricht, wird ein weiterer Lufteintritt über die By-Pass-Leitung gesperrt. Dadurch kommt der Wasserfluss aus dem Wasserbehälter in Richtung des Verdampfungsbeckens zum Erliegen. Dies ist erwünscht, da mit Erreichen dieses Wasserspiegels der optimale Füllungsrad des Verdampfungsbeckens erreicht ist, und dies andererseits auch erforderlich ist, um das Verdampfungsbecken gegen ein Überlaufen zu schützen. Dieser oben geschilderte Vorgang wiederholt sich fortwährend und in selbstregulierender Weise wird ein Wassernachlauf in das Verdampfungsbecken ermöglicht, sobald der Wasserspiegel in dem Verdampfungsbecken vom Höhenniveau her unterhalb des Höhenniveaus des ersten Übergangsbereichs zwischen der Hauptleitung und der By-Pass-Leitung abgesunken ist. Für die Regulierung des Wasserstands in dem Verdampfungsbecken sind somit keine zusätzlichen aufwändigen elektrischen und mechanischen Steuerungen und Pumpen, beispielsweise Magnetventile oder dergleichen, mehr erforderlich. Dadurch kann eine Kosteneinsparung und eine Bauteilreduzierung ermöglicht werden. Auch eine Anfälligkeit des Dampfgargeräts gegen technische Störungen kann dadurch reduziert werden.

Die Hauptleitung zwischen dem Wasserbehälter und der By-Pass-Leitung kann derart ausgebildet sein, dass ein erster Teilbereich, welcher sich zwischen dem Wasserbehälter und der By-Pass-Leitung erstreckt, einen größeren Leitungsquerschnitt aufweist, als ein zweiter Teilbereich, welcher sich zwischen der By-Pass-Leitung und dem Garraum erstreckt. Dadurch kann in zuverlässiger Weise verhindert werden, dass in dem Garraum und insbesondere in dem Verdampfungsbecken gebildete Verdampfungsrückstände und/oder Fettablagerungen ("Fettaugen", welche im Wasser im Verdampfungsbecken schwimmen) in die Verbindungsleitung gelangen können. Somit kann in effektiver Weise verhindert werden, dass durch Eindringen derartiger Teilchen und Ablagerungen der Querschnitt der Verbindungsleitung verstopft wird und dadurch die Wasserzuführung vom Wasserbehälter in den Garraum und insbesondere in das Verdampfungsbecken eingeschränkt werden würde. Ferner kann dadurch auch ermöglicht werden, dass ein häufiges und aufwändiges Reinigen der Verbindungsleitung und/oder des Wasserbehälters deutlich reduziert werden kann.

Indem das Wirkprinzip des Wassernachfüllens beim vorliegenden Dampfgargerät durch die Luftzuführung über die By-Pass-Leitung erfolgt, welche beabstandet zum Verdampfungsbecken angeordnet ist und nicht in das Verdampfungsbecken mündet, wird der Transport derartiger Ablagerungen und Verunreinigungen in der Verbindungsleitung reduziert und in optimaler Weise auch vollständig verhindert. Darüber hinaus kann auch der weitere Transport derartiger Ablagerungen in den Wasserbehälter vermieden werden. Denn die bisher auch teilweise an den Luftblasen anlagernden Fettpartikel wurden bei der Wanderung der Luftblase über die Verbindungsleitung in den Wasserbehälter befördert. Da die Luftblase nunmehr über die By-Pass-Leitung eingeleitet wird, wandert diese lediglich von der By-Pass-Leitung über den ersten Teilbereich der Verbindungsleitung in den Wasserbehälter. Eine Anlagerung der in dem Verdampfungsbecken enthaltenen Ablagerungen an die Luftblasen kann dadurch vermieden werden.

Bevorzugt ist der Übergangsbereich zwischen der Verbindungsleitung und der By-Pass-Leitung quasi stufenförmig ausgebildet. Dies bedeutet, dass der erste Übergangsbereich zwischen der By-Pass-Leitung und dem ersten Teilbereich der Verbindungsleitung vom Höhenniveau höher angeordnet ist, als der Übergangsbereich (zweite Übergangsbereich) zwischen der By-Pass-Leitung und dem zweiten Teilbereich der Verbindungsleitung. Dadurch kann das Funktionsprinzip des vorliegenden Dampfgargeräts im Hinblick auf ein selbstregulierendes Nachfüllen des Wassers in das Verdampfungsbecken in optimaler Weise realisiert werden. Durch eine derartige Ausgestaltung und eine Ausbildung der Verbindungsleitung mit zwei Teilbereichen mit unterschiedlichem Querschnitt kann einerseits der Lufteintritt in zuverlässiger Weise im erforderlichen Falle gewährleistet werden und andererseits ein sicherer Wassernachlauf ermöglicht werden, ohne dass die Ablagerungen vom Verdampfungsbecken zurück in den Wasserbehälter gelangen könnten.

Die By-Pass-Leitung kann prinzipiell an jeder Stelle von der Hauptleitung abzweigen.

Bevorzugt kann vorgesehen sein, dass die By-Pass-Leitung in einer Querschnittdarstellung an einer Seite der Hauptleitung abzweigt, welche einem im Garraum angeordneten Verdampfungsbecken abgewandt ist. Vorteilhaft kann es sich dabei erweisen, wenn die By-Pass-Leitung im Wesentlichen im Bereich des dem Wasserbehälter zugewandten Endbereichs der Hauptleitung abzweigt. Dadurch kann eine aufwandsarme Reinigung des Gesamtsystems der Verbindungsleitung ermöglicht werden.

In vorteilhafter Weise ist die By-Pass-Leitung in einem Koppelmodul ausgebildet. Das Koppelmodul umfasst in vorteilhafter Weise auch den Endbereich der Hauptleitung des Verbindungsleitungssystems, welcher mit dem Wasserbehälter zu verbinden ist. Dadurch kann ein kompaktes System bereitgestellt werden, in dem die By-Pass-Leitung und zumindest ein Endbereich der Hauptleitung platzsparend angeordnet sind. Darüber hinaus kann dadurch auch ein mechanisch stabiles System geschaffen werden.

In vorteilhafter Weise weist das Koppelmodul einen Mündungsbereich auf, welcher zur atmosphärisch dichten Verbindung mit dem Wasserbehälter ausgebildet ist. Die bevorzugterweise lösbare Verbindung ermöglicht somit ein schnelles und einfaches Verbinden des Wasserbehälters mit der Verbindungsleitung. Dadurch kann ein schnelles und aufwandsarmes Abnehmen und Trennen dieser beiden Teile voneinander ermöglicht werden. Dies kann beispielsweise für die Reinigung des Wasserbehälters vorteilhaft sein. Auch die Handhabung der Verbindungsleitung im Hinblick auf eine Reinigung kann dadurch erleichtert werden.

In dem Koppelmodul kann benachbart zum Mündungsbereich ein Ventil angeordnet sein, welches die Wasserzufuhr bzw. die Wasserleitung durch die Hauptleitung des Verbindungsleitungssystems unterbricht.

Die By-Pass-Leitung ist in dem Koppelmodul derart angeordnet bzw. derart ausgebildet, dass sie mit einem ersten Ende aus der dem Wasserbehälter zugewandten Seite des Koppelmoduls austritt und in die Atmosphäre mündet. In einer vorteilhaften Ausgestaltung ist die By-Pass-Leitung an diesem ersten Ende trichterförmig ausgebildet. Dadurch kann ermöglicht werden, dass beim Abnehmen des Wasserbehälters von dem Koppelmodul aus dem Wasserbehälter austropfendes Wasser von dem trichterförmigen ersten Ende der By-Pass-Leitung aufgefangen werden kann und über die By-Pass-Leitung, insbesondere bis zum Verdampfungsbecken, weitertransportiert werden kann. Verunreinigungen des Dampfgargeräts durch auslaufendes Wasser beim Abnehmen des Wasserbehälters können dadurch verhindert werden.

Die By-Pass-Leitung kann derart angeordnet sein, dass sie einen stetig ansteigenden Verlauf aufweist. Dies bedeutet im Vorliegenden, dass die By-Pass-Leitung ausgehend von dem in die Hauptleitung der Verbindungsleitung mündenden zweiten Ende bis zu dem in die Atmosphäre mündenden ersten Ende stetig nach oben geführt ist. Dies ermöglicht eine optimale Luftzuführung und gewährleistet eine By-Pass-Leitung mit minimaler Länge.

Es kann jedoch auch vorgesehen sein, dass die By-Pass-Leitung einen nicht stetig ansteigenden Verlauf aufweist.

In entsprechender Weise kann vorgesehen sein, dass auch die Hauptleitung des Verbindungsleitungssystems stetig ansteigend angeordnet ist. Auch bei der Hauptleitung bedeutet dies, dass diese ausgehend von dem in den Garraum und insbesondere in das Verdampfungsbecken mündenden Ende bis hin zum in den Wasserbehälter mündenden Ende stetig nach oben geführt ist.

Durch die variable Anordnung der Verbindungsleitung kann eine Wasserzufuhr in den Garraum ermöglicht werden, bei dem das Wasser lediglich der Schwerkraft folgend geleitet wird.

Die Hauptleitung kann jedoch in vorteilhafter Weise auch derart ausgebildet sein, dass sie zumindest einen Teilbereich aufweist, welcher ansteigend verläuft und darüber hinaus einen zweiten Teilbereich aufweist, welcher abfallend angeordnet ist. Dies bedeutet, dass im gesamten Verlauf der Hauptleitung zumindest an einer Stelle ein Minimum ausgebildet ist. Eine derartige Ausgestaltung ist möglich, da die Luftzufuhr und somit die Verbindung mit der Atmosphäre nicht über die Hauptleitung sondern über die By-Pass-Leitung gewährleistet ist. Ein lediglich der Schwerkraft folgender Wasserlauf von Wasserbehälter bis zum Garraum ist daher nicht mehr zwingend erforderlich.

Die By-Pass-Leitung und die Hauptleitung können in lösbarer oder aber auch in unlösbarer Weise miteinander verbunden sein. Als lösbare Verbindung kann beispielsweise ein Anflanschen vorgesehen sein. Für eine unlösbare Verbindung kann beispielsweise eine Klebeverbindung vorgesehen sein. Insbesondere kann jedoch auch vorgesehen sein, dass die By-Pass-Leitung und die Hauptleitung einstückig ausgebildet sind. Ist die Verbindungsleitung relativ starr ausgebildet, so kann beispielsweise eine Herstellung mit einem Spritzgussverfahren möglich sein.

Es kann vorgesehen sein, dass die By-Pass-Leitung und/oder die Hauptleitung aus einem flexiblen Material ausgebildet sind. Beispielsweise kann ein Siphon vorgesehen sein. Möglich ist auch jede andere schlauchförmige Ausbildung. Darüber hinaus kann auch vorgesehen sein, dass die By-Pass-Leitung und/oder die Hauptleitung zumindest teilweise flexibel ausgebildet sind. Dadurch kann ein variables System geschaffen werden, welches im Hinblick auf Platzbedarf und Anordnung in optimaler Weise und situationsabhängig hergestellt und bereitgestellt werden kann.

Ausführungsbeispiele der Erfindung werden nachfolgend anhand schematischer Zeichnungen näher erläutert. Es zeigen:
- Fig. 1: ein Dampfgargerät in einer perspektivischen Ansicht;
- Fig. 2: eine schematische Darstellung der wasserführenden Einrichtungen des Dampfgargeräts in einem ersten Betriebszustand;
- Fig. 3: eine schematische Darstellung der wasserführenden Einrichtungen des Dampfgargeräts in einem zweiten Betriebszustand;
- Fig.4: eine schematische Darstellung der wasserführenden Einrichtungen des Dampfgargeräts in einem dritten Betriebszustand;
- Fig. 5: eine schematische Darstellung der wasserführenden Einrichtungen des Dampfgargeräts gemäß einem zweiten Ausführungsbeispiel;
- Fig. 6: eine weitere Darstellung der in Fig. 5 gezeigten Ausführung;
- Fig. 7: eine schematische Darstellung der wasserführenden Einrichtungen des Dampfgargeräts gemäß einer dritten Ausführung;
- Fig. 8: eine schematische Darstellung der wasserführenden Einrichtungen des Dampfgargeräts gemäß einer vierten Ausführung; und
- Fig. 9: eine schematische Darstellung eines Teilbereichs der wasserführenden Einrichtungen des Dampfgargeräts gemäß einer weiteren Ausführung.

In den Figuren werden gleiche oder funktionsgleiche Elemente mit den gleichen Bezugszeichen versehen.

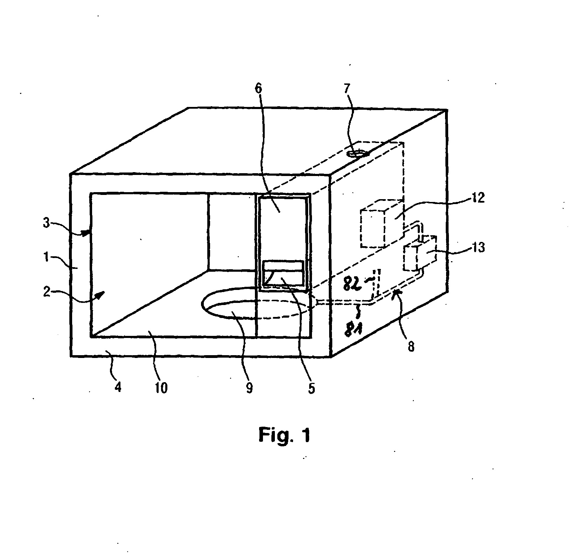

In einem Gerätegehäuse 1 eines Dampfgargeräts ist ein Garraum 2 angeordnet, der über eine Öffnung 3 bedienbar ist. Die Öffnung 3 des Garraums 2 ist im Allgemeinen mit einer Tür verschlossen, die in Fig. 1 nicht dargestellt ist. Neben der Öffnung 3 befindet sich auf der Frontseite 4 des Dampfgargeräts eine Griffeinrichtung 5 an einem Wasserbehälter 6. Der Wasserbehälter 6 kann mittels dieser Griffeinrichtung 5 aus dem Gerätegehäuse 1 herausgenommen, insbesondere herausgezogen werden, um nach Abnehmen eines Deckels 7 mit Wasser befüllt zu werden. Im eingeschobenen Zustand kann Wasser aus dem Wasserbehälter 6 über eine Verbindungsleitung 8 in ein Verdampfungsbecken 9, welches im Garraum frei angeordnet ist, gelangen. Die Verbindungsleitung 8 umfasst eine Hauptleitung 81 und eine By-Pass-Leitung 82. Die By-Pass-Leitung 82 zweigt von der Hauptleitung 81 ab und mündet in die Atmosphäre. Es kann dabei vorgesehen sein, dass die By-Pass-Leitung 82 derart ausgebildet ist, dass sie innerhalb des Dampfgargeräts in die Atmosphäre mündet. Es kann jedoch auch vorgesehen sein, dass die By-Pass-Leitung 82 aus dem Dampfgargerät und insbesondere aus dem Gerätegehäuse 1 austritt und in die Atmosphäre mündet.

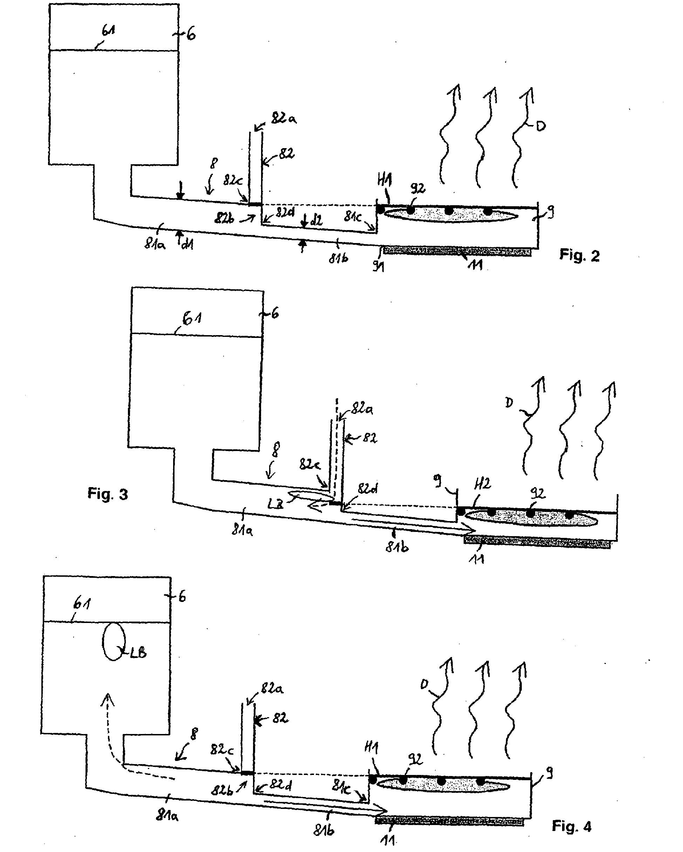

Das Verdampfungsbecken 9 ist auf einer Bodenfläche 10 im Garraum 2 angeordnet. Unter dem Verdampfungsbecken 9 ist ein in Fig. 1 nicht dargestelltes Heizelement 11 (beispielsweise Fig. 2) angeordnet, über das das Wasser in dem Verdampfungsbecken 9 erhitzt und verdampft werden kann.

Im Ausführungsbeispiel ist am Auslauf des Wasserbehälters 6 ein Rückschlagventil 12 angeordnet. Darüber hinaus ist in der Verbindungsleitung 8 zwischen dem Wasserbehälter 6 und dem Verdampfungsbecken 9 ein Absperrventil 13 angeordnet.

Die durch den Deckel 7 verschließbare Nachfüllöffnung ist im Wasserbehälter 6 im Ausführungsbeispiel atmosphärisch abdichtend ausgebildet. Diese Nachfüllöffnung kann hinsichtlich Lage und Größe bezüglich einer möglichst bequemen Handhabung des Wasserbehälters 6 beim Nachfüllen gestaltet werden. Es kann vorteilhaft sein, die Nachfüllöffnung in der Nähe des Griffs 5 am Wasserbehälter 6 anzuordnen, womit ein Handhaben des Wasserbehälters 6 beim Nachfüllen erleichtert werden kann. Bevorzugt ist der Durchmesser der Nachfüllöffnung so groß gewählt, dass beispielsweise ein Wasserstrahl aus einem Haushaltswasserhahn bequem hindurchgeleitet werden kann.

Bei der Entnahme des Wasserbehälters 6 aus dem Gerätegehäuse 1 und der damit verbundenen Entkopplung des Wasserbehälters 6 von der Verbindungsleitung 8 schließt das Rückschlagventil 12, so dass das eventuell vorhandene Restwasser im Allgemeinen aus dem Wasserbehälter 6 nicht ausfließen kann.

Das Absperrventil 13 kann vorzugsweise von der Frontseite 4 des Dampfgargeräts und dort von einer nicht dargestellten Bedienungseinrichtung aktiviert werden. Durch das Absperrventil 13 kann das Nachfließen von Wasser, wenn das Verdampfungsbecken 9 zum Beispiels zu Reinigungszwecken geleert wird, verhindert werden.

Der Wasserbehälter 6 kann beispielsweise auch in das Dampfgargerät und insbesondere in das Gerätegehäuse 1 integriert sein. Der Wasserbehälter 6 ist im Ausführungsbeispiel atmosphärisch dicht geschlossen. Aus dem Wasserbehälter 6 kann somit nur Wasser entweichen, wenn zugleich Luft als Druck- und Volumenausgleich für die Verbindungsleitung 8, insbesondere über die By-Pass-Leitung 82, einströmen kann. Im Wasserbehälter 6 ist ein Unterdruck im Vergleich zur Atmosphäre vorherschend. Dieser kann beispielsweise durch eine Pumpe erzeugt werden.

In Fig. 2 ist eine schematische Darstellung lediglich der wasserführenden Einrichtungen des Dampfgargeräts gezeigt. Wie dabei zu erkennen ist, ist der Wasserbehälter 6 bis zu einem Füllstand 61 mit Wasser gefüllt. Die Verbindungsleitung 8 umfasst die Hauptleitung 81, welche im gezeigten Ausführungsbeispiel einen ersten Teilbereich 81 a und einen zweiten Teilbereich 81 b aufweist. Die Hauptleitung 81 stellt eine Verbindung zwischen dem Wasserbehälter 6 und dem Verdampfungsbecken 9 her. Wie zu erkennen ist, ist die Hauptleitung 81 ausgehend von dem in das Verdampfungsbecken 9 mündenden Ende stetig ansteigend angeordnet. Von dieser Hauptleitung 81 zweigt die By-Pass-Leitung 82 ab. Die By-Pass-Leitung 82 ist im Ausführungsbeispiel im Wesentlichen vertikal angeordnet und einstückig mit der Hauptleitung 81 verbunden. Sowohl die Hauptleitung 81 also auch die By-Pass-Leitung 82 sind aus einem flexiblen Material und einstückig ausgebildet.

Wie zu erkennen ist, weist der erste Teilbereich 81 a der Hauptleitung 81 einen Durchmesser d1 auf, welcher größer ist als ein Durchmesser d2 des zweiten Teilbereichs 81 b. Die By-Pass-Leitung 82 zweigt bei der Hauptleitung 81 im Ausführungsbeispiel genau an der Stelle ab, an der die beiden Teilbereiche 81 a und 81 b zusammentreffen. Dadurch wird ein im Wesentlichen stufenförmiger Übergang ausgebildet. Dies ist in Fig. 2 dadurch zu erkennen, dass ein erster Übergangsbereich 82c zwischen der By-Pass-Leitung 82 und dem ersten Teilbereich 81 a in vertikaler Betrachtungsrichtung vom Höhenniveau her oberhalb eines zweiten Übergangsbereichs 82d liegt. Dieser zweite Übergangsbereich 82d ist am Übergang zwischen der By-Pass-Leitung 82 und dem zweiten Teilbereich 81 b der Hauptleitung 81 ausgebildet. Die By-Pass-Leitung 82 weist ein in die Atmosphäre mündendes erstes Ende 82a und ein in die Hauptleitung 81 mündendes zweites Ende 82b auf. Wie aus der Darstellung in Fig. 2 zu erkennen ist, mündet der zweite Teilbereich 81b im Ausführungsbeispiel seitlich in das Verdampfungsbecken 9. Die Einmündung ist dabei derart ausgebildet, dass sie im Wesentlichen im Bereich des Bodens 91 des Verdampfungsbeckens 9 einmündet. Eine Oberkante 81c des zweiten Teilsbereichs 81b liegt auf einem Höhenniveau, welches unterhalb dem ersten Übergangsbereich 82c angeordnet ist. Dies ist erforderlich, um das selbstregulierende Funktionsprinzip der Wassernachfüllung in das Verdampfungsbecken 9 realisieren zu können.

Wie des Weiteren in Fig. 2 gezeigt ist, ist der Befüllungsgrad im Verdampfungsbecken 9 auf einem Höhenniveau H1. Dies stellt im Hinblick auf einen optimalen Betrieb des Dampfgargeräts einen optimalen Befüllungsgrad des Verdampfungsbeckens 9 dar. Dieses Höhenniveau H1 ist im Wesentlichen auf dem Höhenniveau des ersten Übergangsbereichs 82c. Dadurch kann in der gezeigten Darstellung in Fig. 2 eine von der Atmosphäre in die By-Pass-Leitung 82 einfließende Luft nicht in die Hauptleitung 81 gelangen. Die Hauptleitung 81 ist in der gezeigten Darstellung vollständig mit Wasser gefüllt, wobei sich der Wasserstand im ersten Teilbereich 81 a an der Abzweigung (Übergangsbereich 82c) der By-Pass-Leitung 82 auf dem Höhenniveau H1 befindet. Dadurch wird die By-Pass-Leitung 82 durch den Wasserstand praktisch abgesperrt.

Im Betrieb des Dampfgargeräts wird das in dem Verdampfungsbecken 9 enthaltene Wasser durch das Heizelement 11 derart aufgeheizt, dass ein Verdampfungsprozess einsetzt und Dampf D erzeugt wird. Dadurch entstehen unter anderem Verdampfungsablagerungen und/oder Fettpartikel 92, welche sich an der Oberfläche des Wassers im Verdampfungsbecken 9 ansammeln.

Durch diesen Verdampfungsprozess sinkt der Wasserstand im Verdampfungsbecken 9 auf ein Höhenniveau H2, welches in Fig. 3 gezeigt ist. Wie dabei zu erkennen ist, sinkt somit auch der Wasserstand am Übergangsbereich 82c kurzeitig derart ab, dass Lufteintritt in den ersten Teilbereich 81 a über die By-Pass-Leitung 82 möglich ist. Dabei tritt eine Luftblase LB in den ersten Teilbereich 81 a ein, welche in Richtung des Wasserbehälters 6 wandert.

Aufgrund des hier realisierten Volumen- bzw. Druckausgleichsprinzips wird eine Einleitung von Wasser in das Verdampfungsbecken 9 ermöglicht.

Durch den relativ großen Durchmesser d1 des ersten Teilbereichs 81 a kann der Lufteintritt über die By-Pass-Leitung 82 beim Absinken des Wasserstands in dem Verdampfungsbecken 9 unter das Höhenniveau H1 zuverlässig ermöglicht werden.

Wie in Fig. 3 und auch in Fig. 4 angedeutet, setzt dann ein Wasserfluss ein, welcher das Befüllen des Verdampfungsbeckens 9 auf den Ausgangswasserstand (Höhenniveau H1) gewährleistet. Ist dieses Höhenniveau H1 erreicht, tritt am Übergangsbereich 82c wiederum ein sperrender Zustand ein, welcher das Eindringen von Luft über die By-Pass-Leitung 82 in die Hauptleitung 81 versperrt.

Durch die in den Fig. 2 bis Fig. 4 dargestellte Ausgestaltung kann erreicht werden, dass der Befüllungsgrad im Verdampfungsbecken 9 praktisch stets über der Oberkante 81c des Teilbereichs 81 b der Hauptleitung 81 liegt. Dadurch kann verhindert werden, dass die Ansammlungen und Ablagerungen (beispielsweise Fettpartikel 92) im Verdampfungsbecken 9 über die Hauptleitung 81 in den Wasserbehälter 6 gelangen.

Verstopfungen der Hauptleitung 81 und insbesondere des zweiten Teilbereichs 81 b, sowie Verunreinigungen des im Wasserbehälters 6 enthaltenen Wassers kann dadurch verhindert werden.

Da im zweiten Teilbereich 81b ein Wasserfluss lediglich in Richtung des Verdampfungsbeckens 9 möglich ist (siehe Pfeilrichtung in Fig.3 und Fig. 4) kann auch gewährleistet werden, dass selbst dann, wenn absinkende Ablagerungen teilweise in den zweiten Teilbereich 81 b gelangen würden, unmittelbar nachfolgend wieder in das Verdampfungsbecken 9 gespült werden würden.

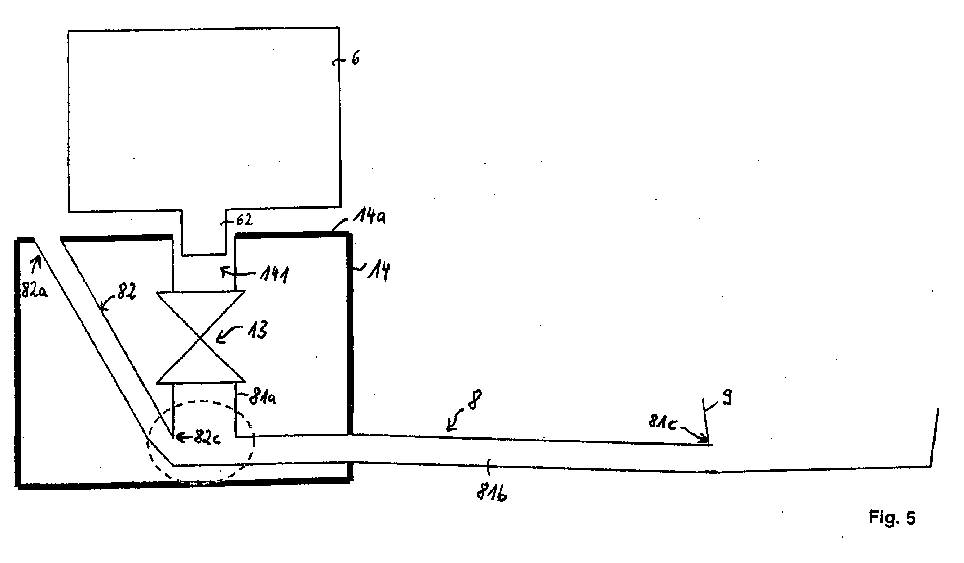

In Fig. 5 ist eine weitere schematische Darstellung der wasserführenden Einrichtungen des Dampfgargeräts gemäß einer weiteren Ausgestaltung gezeigt. Wie dabei zu erkennen ist, ist ein Koppelmodul 14 ausgebildet, in dem die By-Pass-Leitung 82 angeordnet ist. Darüber hinaus ist in diesem Koppelmodul 14 auch ein Teilbereich der Hauptleitung 81 angeordnet. Im gezeigten Ausführungsbeispiel ist der erste Teilbereich 81 a in dem Koppelmodul 14 angeordnet. Der zweite Teilbereich 81 b ist lediglich bereichsweise in dem Koppelmodul 14 angeordnet.

Wie zu erkennen ist, erstreckt sich die By-Pass-Leitung 82 in der Querschnittdarstellung in dem Koppelmodul 14 stetig ansteigend.

Darüber hinaus zweigt die By-Pass-Leitung 82 in der gezeigten Querschnittdarstellung von einer dem Verdampfungsbecken 9 abgewandten Seite der Hauptleitung 81 von dieser Hauptleitung 81 ab. Prinzipiell kann die By-Pass-Leitung 82 jedoch an beliebiger Stelle von der Hauptleitung 81 abzweigen.

In dem Koppelmodul 14 ist darüber hinaus auch das Absperrventil 13 angeordnet. Das in die Atmosphäre mündende erste Ende 82a der By-Pass-Leitung 82 tritt an einer Oberseite 14a des Koppelmoduls 14 aus. An dieser Oberseite 14a ist ein Mündungsbereich 141 ausgebildet, in den ein Anschlussbereich 62 des Wasserbehälters 6 einführbar ist. Der Anschlussbereich 62 kann im Ausführungsbeispiel atmosphärisch dichtend mit dem Koppelmodul 14 verbunden, beispielsweise angeflanscht, werden.

Auch in dieser Ausgestaltung ist der Übergangsbereich 82c auf einem Höhenniveau angeordnet, welches über der Oberkante 81 c liegt. Das Funktionsprinzip ist analog zu dem in den in Fig. 2 bis Fig. 4 erläuterten Prinzip.

Durch eine derartige Ausbildung eines Koppelmoduls 14 kann ein mechanisch stabiles und kompaktes System bereitgestellt werden, welches eine einfache und zuverlässige Handhabung im Hinblick auf die Verbindung mit dem Wasserbehälter 6 ermöglicht. Darüber hinaus kann auch eine mechanisch stabile und positionsgenaue Anordnung der Hauptleitung 81 oder zumindest von Teilbereichen davon, und der By-Pass-Leitung 82 gewährleistet werden.

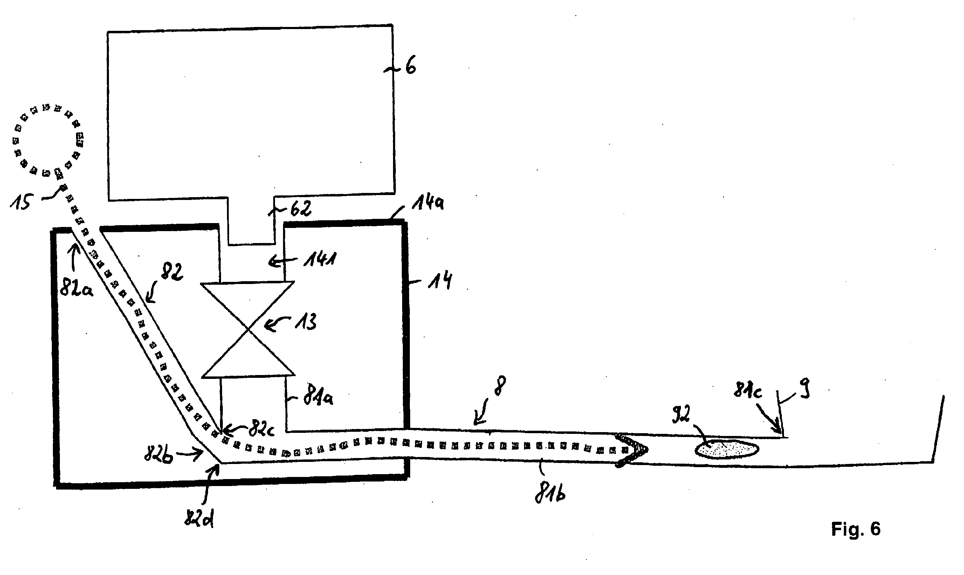

In Fig. 6 ist die Vorteilhaftigkeit des in Fig. 5 dargestellten Prinzips zu erkennen. In einfacher Weise kann über die By-Pass-Leitung 82 ein Reinigungselement 15, welches insbesondere flexibel ausgebildet ist, eingeführt werden. Dies kann im Wesentlichen über die gesamte Länge der Verbindungsleitung 8 bewegt werden. Dadurch kann ein einfaches Reinigen im Wesentlichen der gesamten Verbindungsleitung 8 durchgeführt werden. Zufällig in die Verbindungsleitung 8 gelangte Verunreinigungen und Ablagerungen (Fettpartikel 92) können somit einfach entfernt werden.

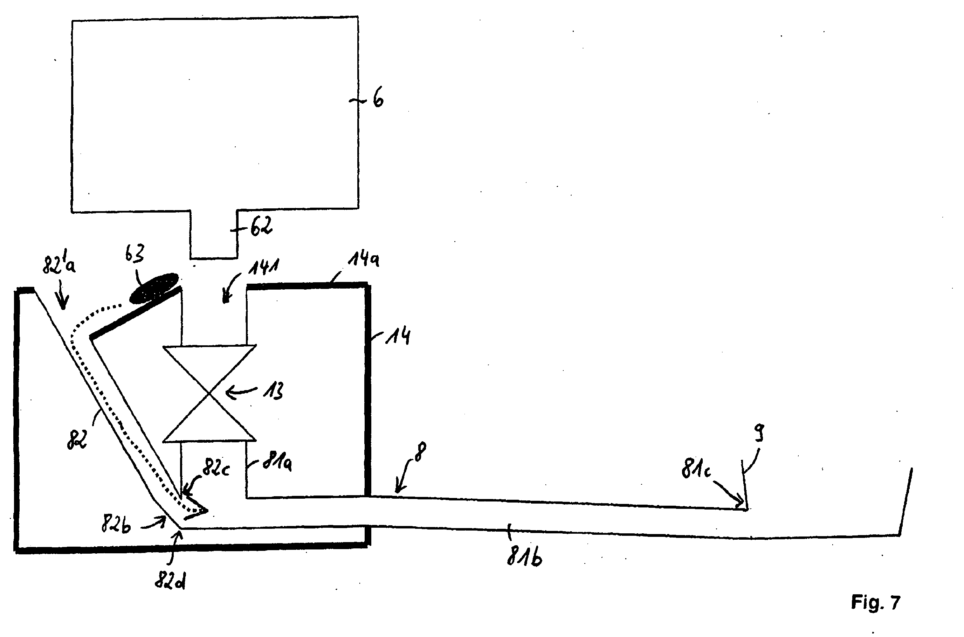

In Fig. 7 ist eine weitere Ausführung der wasserführenden Einrichtungen in schematischer Weise gezeigt. Im Unterschied zu den in Fig. 5 und 6 erläuterten Ausgestaltungen ist in Fig. 7 die By-Pass-Leitung 82 an dem in die Atmosphäre mündenden ersten Ende 82'a trichterförmig ausgebildet. Die Trichterstruktur ist dabei benachbart zum Mündungsbereich 141 ausgebildet. Dadurch kann gewährleistet werden, dass dann, wenn der Wasserbehälter 6 von dem Koppelmodul 14 entfernt wird oder in diesen eingesetzt wird, das aus dem Anschlussbereich 62 austropfende Wasser über den trichterförmigen Bereich der By-Pass-Leitung 82 aufgefangen und dann über die Hauptleitung 81 in das Verdampfungsbecken 9 eingeleitet wird. Verunreinigungen des Dampfgargeräts durch aus dem Anschlussbereich 62 austropfendes Wasser kann dadurch verhindert werden. Denn, da das Absperrventil 13 in dem gezeigten Zustand in Fig. 7 (Wasserbehälter 6 ist von dem Koppelmodul 14 und somit auch von der Verbindungsleitung 8 entkoppelt) sperrt, könnte ansonsten das Wasser über die Oberseite 14a ablaufen und sich im Dampfgargerät verteilen. Dies könnte auch zu technischen Störungen des Dampfgargeräts führen. Durch die in Fig. 7 gezeigte Ausgestaltung der By-Pass-Leitung 82 kann dies verhindert werden.

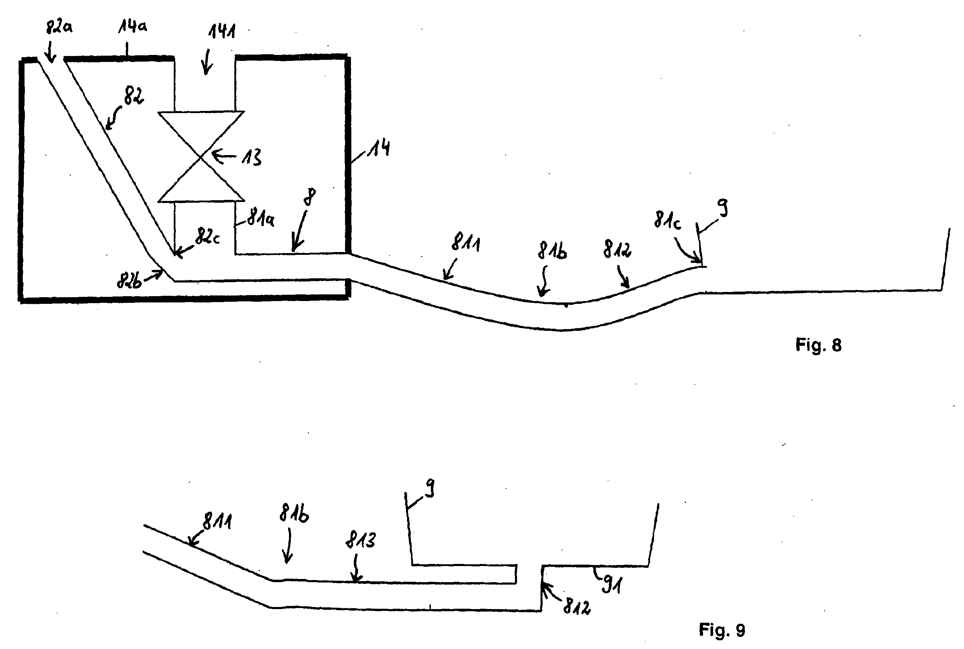

In Fig. 8 ist eine Ausgestaltung der Verbindungsleitung 8 gezeigt, welche einen nicht stetig ansteigenden Verlauf aufweist. Dies kann bei dem vorliegenden Dampfgargerät realisiert werden, da das Druck- bzw. Volumenausgleichsprinzip zur Wassernachförderung in das Verdampfungsbecken 9 mittels der By-Pass-Leitung 82 durchgeführt wird. Wie zu erkennen ist, ist in der in Fig. 8 gezeigten Ausführung ein nicht stetig ansteigender Verlauf im zweiten Teilbereich 81 b ausgebildet. Dabei zeigt dieser zweite Teilbereich 81 b einen gekrümmten bzw. bogenförmigen Verlauf, welcher einen ansteigenden Bereich 811 und einen abfallenden Bereich 812 aufweist. Der zweite Teilbereich 81b der Hauptleitung 81 weist somit ein Minimum in seinem Verlauf auf. In der in Fig. 8 gezeigten Ausgestaltung ist zumindest der zweite Teilbereich 81 b aus einem flexiblen Material ausgebildet. Im Ausführungsbeispiel ist der zweite Teilbereich 81 b als Siphon ausgebildet.

In Fig. 9 ist eine weitere Ausführung der Verbindungsleitung 8 gezeigt. Auch hier weist der zweite Teilbereich 81 b einen nicht stetig ansteigenden Verlauf auf. Wie zu erkennen ist, geht der stetig ansteigende Bereich 811 in einen horizontalen Bereich 813 über, welcher in einen vertikal orientierten und somit im Sinne der hier gewählten Nomenklatur in einem abfallenden Bereich 812 übergeht. Wie aus der Darstellung in Fig. 9 zu erkennen ist, mündet der zweite Teilbereich 81 b im Bodenbereich 91 in das Verdampfungsbecken 9. Durch eine derartige Ausgestaltung kann praktisch ausgeschlossen werden, dass Ablagerungen in die Hauptleitung 81 gelangen können.

## Patentansprüche

1. Dampfgargerät zum Garen von Lebensmitteln mittels Dampf, mit einem Garraum (2), einem Wasserbehälter (6) zur Speicherung von Wasser, einer Heizeinrichtung (11) zum Verdampfen von Wasser, und einer Verbindungsleitung (8) zwischen dem Wasserbehälter (6) und dem Garraum (2), über die das Wasser von dem Wasserbehälter (6) in den Garraum (2) einleitbar ist **dadurch gekennzeichnet, dass** der Wasserbehälter (6) im Betrieb des Dampfgargerätes ausschließlich über die Verbindungsleitung (8) mit der Atmosphäre verbunden ist, wobei die Verbindungsleitung (8) eine Hauptleitung (81) aufweist, welche sich zwischen dem Wasserbehälter (6) und dem Garraum (2) erstreckt, und eine By-Pass-Leitung (82) aufweist, welche von der Hauptleitung (81) abzweigt und in die Atmosphäre mündet.

2. Dampfgargerät nach Anspruch 1, **dadurch gekennzeichnet, dass** ein in die Atmosphäre mündendes erstes Ende (82a) der By-Pass-Leitung (82) vom Höhenniveau oberhalb dem in die Hauptleitung (81) mündenden zweiten Ende (82b) angeordnet ist.

3. Dampfgargerät nach Anspruch 1 oder 2, **dadurch gekennzeichnet, dass** die Hauptleitung (81) innerhalb des Garraums (2) in ein Verdampfungsbecken (9) mündet.

4. Dampfgargerät nach Anspruch 3, **dadurch gekennzeichnet, dass** eine Oberkante (81 c) der Hauptleitung (81) im Bereich der Einmündung in das Verdampfungsbecken (9) vom Höhenniveau niedriger angeordnet ist als ein erster Übergangsbereich (82c) zwischen der Hauptleitung (81) und der By-Pass-Leitung (82).

5. Dampfgargerät nach einem der vorhergehenden Ansprüche, **dadurch gekennzeichnet, dass** die Hauptleitung (81) einen erste Teilbereich (81 a) und einen zweiten Teilbereich (81 b) aufweist, wobei ein Durchmesser (d1) des ersten Teilbereichs (81 a) größer ist als ein Durchmesser (d2) des zweiten Teilbereichs (81b).

6. Dampfgargerät nach Anspruch 5, **dadurch gekennzeichnet, dass** sich der erste Teilbereich (81 a) zwischen dem Wasserbehälter (6) und der By-Pass-Leitung (82) und sich der zweite Teilbereich (81 b) zwischen der By-Pass-Leitung (82) und dem dem Garraum (2), insbesondere dem Verdampfungsbecken (9), erstreckt.

7. Dampfgargerät nach einem der vorhergehenden Ansprüche, **dadurch gekennzeichnet, dass** die By-Pass-Leitung (82) an einer Seite der Hauptleitung (81) abzweigt, welche einem im Garraum (2) angeordneten Verdampfungsbecken (9) abgewandt ist.

8. Dampfgargerät nach einem der vorhergehenden Ansprüche, **dadurch gekennzeichnet, dass** zumindest die By-Pass-Leitung (82) in einem Koppelmodul (14) ausgebildet ist.

9. Dampfgargerät nach Anspruch 8, **dadurch gekennzeichnet, dass** das Koppelmodul (14) einen Mündungsbereich (141) aufweist, welcher zur Verbindung, insbesondere atmosphärisch dichten Verbindung, mit dem Wasserbehälter (6) ausgebildet ist.

10. Dampfgargerät nach Anspruch 8 oder 9, **dadurch gekennzeichnet, dass** die By-Pass-Leitung (82) mit einem ersten Ende (82a) aus einer dem Wasserbehälter (6) zugewandten Seite (14a) des Koppelmoduls (14) austritt.

11. Dampfgargerät nach Anspruch 10, **dadurch gekennzeichnet, dass** das erste Ende (82'a) der By-Pass-Leitung (82) trichterförmig ausgebildet ist.

12. Dampfgargerät nach einem der vorhergehenden Ansprüche, **dadurch gekennzeichnet, dass** die By-Pass-Leitung (82) stetig ansteigend angeordnet ist.

13. Dampfgargerät nach einem der vorhergehenden Ansprüche, **dadurch gekennzeichnet, dass** die Verbindungsleitung (8), insbesondere die Hauptleitung (81), einen ansteigenden (81a; 811; 82) und einen abfallenden Bereich (812) aufweist.

14. Dampfgargerät nach einem der vorhergehenden Ansprüche, **dadurch gekennzeichnet, dass** die By-Pass-Leitung (82) und die Hauptleitung (81) unlösbar miteinander verbunden sind, insbesondere einstückig ausgebildet sind.

15. Dampfgargerät nach einem der vorhergehenden Ansprüche, **dadurch gekennzeichnet, dass** die Verbindungsleitung (8) zumindest teilweise aus einem flexiblen Material ausgebildet ist.

## Claims

1. Steam cooker for cooking foodstuffs by means of steam, with a cooking chamber (2), a water container (6) for storage of water, a heating device (11) for evaporation of water and a connecting line (8) between the water container (6) and the steam chamber (2), by way of which the water can be conducted from the water container (6) into the cooking chamber (2), **characterised in that** the water container (6) in operation of the steam cooker is connected with the atmosphere exclusively by way of the connecting line (8), wherein the connecting line (8) comprises a main line (81), which extends between the water container (6) and the cooking chamber (2), and a bypass line (82), which branches off the main line (81) and opens into the atmosphere.

2. Steam cooker according to claim 1, **characterised in that** a first end (81 a), which opens into the atmosphere, of the bypass line (82) is arranged in terms of height level above the second end (82b) opening into the main line (81).

3. Steam cooker according to claim 1 or 2, **characterised in that** the main line (81) opens within the cooking chamber (2) into an evaporation basin (9).

4. Steam cooker according to claim 3, **characterised in that** an upper edge (81 c) of the main line (81) in the region of the opening into the evaporation basin (9) is arranged to be lower in terms of height level than a first transition region (82c) between the main line (81) and the bypass line (82).

5. Steam cooker according to any one of the preceding claims, **characterised in that** the main line (81) has a first sub-region (81 a) and a second sub-region (81 b), wherein a diameter (d1) of the first sub-region (81a) is greater than a diameter (d2) of the second sub-region (81 b).

6. Steam cooker according to claim 5, **characterised in that** the first sub-region (81 a) extends between the water container (6) and the bypass line (82) and the second sub-region (81 b) extends between the bypass line (82) and the cooking chamber (2), particularly the evaporation basin (9).

7. Steam cooker according to any one of the preceding claims, **characterised in that** the bypass line (82) branches off at a side of the main line (81) remote from an evaporation basin (9) arranged in the cooking chamber (2).

8. Steam cooker according to any one of the preceding claims, **characterised in that** at least the bypass line (82) is constructed in a coupling module (14).

9. Steam cooker according to claim 8, **characterised in that** the coupling module (14) has an opening region (141) constructed for connection, particularly a connection sealed with respect to the atmosphere, with the water container (6).

10. Steam cooker according to claim 8 or 9, **characterised in that** the bypass line (82) exits by a first end (82a) from a side (14a) of the coupling module (14) facing the water container (6).

11. Steam cooker according to claim 10, **characterised in that** the first end (82a) of the bypass line (82) is constructed to be funnel-shaped.

12. Steam cooker according to any one of the preceding claims, **characterised in that** the bypass line (82) is arranged to be constantly rising.

13. Steam cooking according to any one of the preceding claims, **characterised in that** the connecting line (8), particularly the main line (81), has a rising region (81 a; 811; 82) and a falling region (812).

14. Steam cooker according to any one of the preceding claims, **characterised in that** the bypass line (82) and the main line (81) are non-detachably connected together, in particular are of integral construction.

15. Steam cooker according to any one of the preceding claims, **characterised in that** the connecting line (8) is constructed at least partly from a flexible material.

## Revendications

1. Appareil de cuisson à vapeur pour cuire des denrées alimentaires à la vapeur, avec un espace de cuisson (2), un réservoir d'eau (6) pour emmagasiner de l'eau, un dispositif de chauffage (11) pour évaporer de l'eau et une conduite de raccordement (8) entre le réservoir d'eau (6) et l'espace de cuisson (2), par laquelle l'eau peut être acheminée du réservoir d'eau (6) à l'espace de cuisson (2),
**caractérisé en ce qu'**en service de l'appareil de cuisson à vapeur, le réservoir d'eau (6) est relié à l'atmosphère exclusivement par la conduite de raccordement (8), la conduite de raccordement (8) comportant une conduite principale (81), laquelle s'étend entre le réservoir d'eau (6) et l'espace de cuisson (2), et une conduite de by-pass (82), laquelle bifurque de la conduite principale (81) et débouche à l'atmosphère.

2. Appareil de cuisson à vapeur selon la revendication 1, **caractérisé en ce qu'**une première extrémité (82a) de la conduite de by-pass (82), débouchant à l'atmosphère, est disposée du point de vue du niveau en hauteur au-dessus de la deuxième extrémité (82b) débouchant dans la conduite principale (81).

3. Appareil de cuisson à vapeur selon la revendication 1 ou 2, **caractérisé en ce que** la conduite principale (81) débouche à l'intérieur de l'espace de cuisson (2) dans un bassin d'évaporation (9).

4. Appareil de cuisson à vapeur selon la revendication 3, **caractérisé en ce qu'**une arête supérieure (81 c) de la conduite principale (81), dans la zone où elle débouche dans le bassin d'évaporation (9), est disposée du point de vue du niveau en hauteur plus bas qu'une première zone de transition (82c) entre la conduite principale (81) et la conduite de by-pass (82).

5. Appareil de cuisson à vapeur selon l'une quelconque des revendications précédentes, **caractérisé en ce que** la conduite principale (81) comporte une première zone partielle (81 a) et une deuxième zone partielle (81 b), un diamètre (d1) de la première zone partielle (81a) étant plus grand qu'un diamètre (d2) de la deuxième zone partielle (81 b).

6. Appareil de cuisson à vapeur selon la revendication 5, **caractérisé en ce que** la première zone partielle (81 a) s'étend entre le réservoir d'eau (6) et la conduite de by-pass (82), et **en ce que** la deuxième zone partielle (81 b) s'étend entre la conduite de by-pass (82) et l'espace de cuisson (2), en particulier le bassin d'évaporation (9).

7. Appareil de cuisson à vapeur selon l'une quelconque des revendications précédentes, **caractérisé en ce que** la conduite de by-pass (82) bifurque depuis un côté de la conduite principale (81) qui est détourné d'un bassin d'évaporation (9) disposé dans l'espace de cuisson (2).

8. Appareil de cuisson à vapeur selon l'une quelconque des revendications précédentes, **caractérisé en ce qu'**au moins la conduite de by-pass (82) est configurée dans un module d'accouplement (14).

9. Appareil de cuisson à vapeur selon la revendication 8, **caractérisé en ce que** le module d'accouplement (14) comporte une zone d'embouchure (141), laquelle est configurée pour le raccordement, en particulier pour un raccordement étanche vis-à-vis de l'atmosphère, avec le réservoir d'eau (6).

10. Appareil de cuisson à vapeur selon la revendication 8 ou 9, **caractérisé en ce que** la conduite de by-pass (82) sort avec une première extrémité (82a) d'un côté (14a) du module d'accouplement (14) tourné vers le réservoir d'eau (6).

11. Appareil de cuisson à vapeur selon la revendication 10, **caractérisé en ce que** la première extrémité (82'a) de la conduite de by-pass (82) est configurée en forme d'entonnoir.

12. Appareil de cuisson à vapeur selon l'une quelconque des revendications précédentes, **caractérisé en ce que** la conduite de by-pass (82) est disposée de façon à être continûment ascendante.

13. Appareil de cuisson à vapeur selon l'une quelconque des revendications précédentes, **caractérisé en ce que** la conduite de raccordement (8), en particulier la conduite principale (81) comporte une partie ascendante (81a ; 811 ; 82) et une partie descendante (812).

14. Appareil de cuisson à vapeur selon l'une quelconque des revendications précédentes, **caractérisé en ce que** la conduite de by-pass (82) et la conduite principale (81) sont liées ensemble de manière indémontable, en particulier sont en une pièce.

15. Appareil de cuisson à vapeur selon l'une quelconque des revendications précédentes, **caractérisé en ce que** la conduite de raccordement (8) est constituée au moins en partie en un matériau flexible.
